Europäisches Patentamt

European Patent Office

Office européen des brevets

(19)

(11) Veröffentlichungsnummer: **0 046 930**
**B1**

(12) # EUROPÄISCHE PATENTSCHRIFT

(45) Veröffentlichungstag der Patentschrift:
02.07.86

(21) Anmeldenummer: 81106466.6

(22) Anmeldetag: 20.08.81

(51) Int. Cl.⁴: **C 08 F 255/02,** C 08 F 263/02 //
(C08F255/02, 218:04, 222:00),
(C08F263/02, 218:04, 220:00)

(54) **Verfahren zur Herstellung von Anhydrid- oder Carboxylgruppen enthaltenden Ethylen-Pfropfcopolymerisaten.**

(30) Priorität: 02.09.80 DE 3033001

(43) Veröffentlichungstag der Anmeldung:
10.03.82 Patentblatt 82/10

(45) Bekanntmachung des Hinweises auf die Patenterteilung:
02.07.86 Patentblatt 86/27

(84) Benannte Vertragsstaaten:
DE FR GB IT

(56) Entgegenhaltungen:
DE-A-2 710 771
GB-A-1 441 189
US-A-4 157 362

Die Akte enthält technische Angaben, die nach
dem Eingang der Anmeldung eingereicht wurden
und die nicht in dieser Patentschrift enthalten sind.

(73) Patentinhaber: BAYER AG, Konzernverwaltung RP
Patentabteilung, D-5090 Leverkusen 1 Bayerwerk
(DE)

(72) Erfinder: Bartl, Herbert, Dr., Eichendorffweg 10,
D-5068 Odenthal (DE)
Erfinder: Schuster, KLaus, Gerhart- Hauptmann-
Strasse 33, D-5090 Leverkusen 3 (DE)

## Beschreibung

Die Erfindung betrifft ein Verfahren zur Herstellung von Pfropfcopolymerisaten aus Vinylestern und Maleinsäureanhydrid und/oder dessen Halbestern als Pfropfmonomere und Homo- oder Copolymerisaten von Ethylen als Pfropfsubstrat in homogener oder heterogener Phase in tert. Butanol oder Methylenchlorid.

Ethylen-Polymerisate, wie Polyethylen oder Ethylen-Vinylester- bzw. Ethylen-Acrylesterpolymerisate, sind Kunststoffe mit vielseitigen Anwendungen. Ein Mangel ist jedoch, daß die Polymerisate meist keine reaktionsfähigen Gruppen enthalten, so daß sie vielen Vernetzungsreaktionen nicht zugänglich sind oder eine mangelnde Verträglichkeit mit anderen makromolekularen Substanzen aufweisen. Durch Copolymerisation von Ethylen mit Monomeren, die reaktionsfähige Gruppen enthalten, werden die Polymerisateigenschaften meist so sehr verändert, daß sie sehr stark von Polyethylen oder den unmodifizierten Ethylen-Vinylester-Polymerisaten abweichen. Insbesondere wird durch das Einpolymerisieren solcher reaktionsfähiger Monomerer das Molgewicht der Polymerisate stark erniedrigt.

Carboxylgruppen enthaltende Pfropfpolymerisate, die durch Polymerisation von Maleinsäureanhydrid und α-Olefinen wie Propylen und Isobutylen oder Styrol in Gegenwart eines Pfropfsubstrats erhalten werden, sind z.B. aus der US-PS 3 737 483 bekannt. Solche Produkte zeigen jedoch in sich erhebliche Unverträglichkeiten. Aus der US-PS 3 953 541 ist ein Verfahren bekannt, mit dem u.a. ungesättigte Carbonsäuren und deren Anhydride oder Ester auf Copolymerisate von Dienen mit Ethylen oder $C_3$-$C_8$-α-Olefinen aufgepfropft werden können. Zur Erzielung guter Pfropfausbeuten muß das Verfahren in Suspension in einem geeigneten organischen Lösungsmittel wie aromatischen und cycloaliphatischen Kohlenwasserstoffen oder gesättigten Carbonsäuren, deren Anhydriden oder Estern durchgeführt werden. Es ist auch bereits versucht worden, Carboxylgruppen in Ethylen-Vinylester-Copolymerisate einzuführen, indem diese z.B. mit Fumarsäure in Gegenwart von Ketonen gepfropft werden, wobei jedoch nur sehr niedermolekulare Pfropfäste erzeugt werden. Aus der DE-OS 2 710 771 und der US-PS 4 157 362 sind Verfahren zur Carboxylierung von Ethylen-Vinylacetat-Copolymerisaten bekannt, bei denen als Pfropfmonomere ungesättigte Carbonsäuren oder deren Anhydride zusammen mit Vinylverbindungen wie Vinylacetat oder Acrylestern eingesetzt werden. Wesentlich ist dabei, daß die Verfahren in heterogenem Zustand ohne Änderung der physikalischen Form des Pfropfsubstrats in Essigsäurealkylestern oder deren Gemischem mit niederen Alkoholen bzw. in Ketonen oder deren Gemischen mit Essigsäurealkylestern durchgeführt werden.

Es wurde nun gefunden, daß man Ethylen-Pfropfcopolymerisate mit Anhydrid- oder Carboxylgruppen erhält, ohne daß die Grundeigenschaften des Pfropfsubstrats nennenswert verändert werden oder Unverträglichkeiten innerhalb der Pfropfcopolymerisatkomponenten auftreten, wenn in Gegenwart von Ethylen-Homo- oder Copolymerisaten als Pfropfsubstrat und von tert. Butanol oder Methylenchlorid als organischem Reaktionsmedium Gemische von Maleinsäureanhydrid und/oder dessen Halbestern mit Vinylestern, vorzugsweise Vinylacetat, radikalisch polymerisiert werden. Die Anhydridgruppen enthaltenden Pfropfcopolymerisate können anschließend mit $C_1$-$C_{20}$-Alkylalkoholen, Ammoniak oder $C_1$-$C_{20}$-Alkylaminen zu den entsprechenden Halbestern oder Halbamiden umgesetzt werden. Vorzugsweise werden hierfür $C_1$-$C_{10}$-Alkylalkohole oder $C_1$-$C_{10}$-Alkylamine eingesetzt wie z.B. Cyclohexanol, Butanol, Ethylhexylalkohol oder Methanol.

Gegenstand der Erfindung ist ein Verfahren zur Herstellung von Anhydrid- oder Carboxylgruppen enthaltenden Ethylen-Pfropfcopolymerisaten in homogener oder heterogener Phase in einem organischen Lösungsmittel, dadurch gekennzeichnet, daß man

A) 5-70, vorzugsweise 5-30 Gew.-% eines Monomerengemisches aus

a) 10-70, vorzugsweise 25-50 Gew.-% eines Vinylesters einer aliphatischen $C_1$-$C_{18}$-Monocarbonsäure, vorzugsweise Vinylacetat, und

b) 90-30, vorzugsweise 75-50 Gew.-% Maleinsäureanhydrid und/oder dessen $C_1$-$C_{20}$-, vorzugsweise $C_1$-$C_{10}$-Alkyl-Halbester in Gegenwart von

B) 95-30, vorzugsweise 95-70 Gew.-% eines Ethylen-Homopolymerisats oder eines Ethylen-Vinylester-Copolymerisats mit 5-70, vorzugsweise 30-50 Gew.-% einpolymerisierten Einheiten eines Vinylesters einer aliphatischen $C_1$-$C_{18}$-Monocarbonsäure als Pfropfsubstrat in tert. Butanol oder Methylenchlorid radikalisch polymerisiert, wobei die Summe von A) und B) bzw. a) und b) jeweils 100 Gew.-% beträgt.

Außer den vorerwähnten Pfropfsubstraten können auch Ethylen-Acrylester-Copolymerisate, Ethylen-Acrylester-Kohlenmonoxid-Copolymerisate oder Copolymerisate von Ethylen mit Propylen, Buten-1 oder anderen ungesättigten polymerisierbaren Kohlenwasserstoffen eingesetzt werden. Bevorzugte Pfropfsubstrate sind Polyethylen und Ethylen-Vinylacetat-Copolymerisate.

Die Verwendung von Maleinsäureanhydrid bzw. dessen Halbestern zur Modifizierung von Ethylen-Polymerisaten nach dem erfindungsgemäßen Verfahren hat verfahrenstechnisch auch den Vorteil, daß aufgrund der alternierend aufgebauten Pfropfäste und der sehr aktiven Polymerisationstendenz die Maleinsäurederivate bevorzugt eingebaut werden, so daß keine schwerflüchtigen Restmonomere übrig bleiben, die kaum vollständig aus den Polymerisaten entfernt werden könnten. Dies gilt besonders dann, wenn auf 1 Mol des Maleinsäurederivats mindestens 1 Mol des Vinylesters copolymerisiert wird. Polymerisationsfähige Maleinsäurederivate sind im Sinne der vorliegenden Erfindung Maleinsäureanhydrid und Maleinsäurehalbester sowie gegebenenfalls Maleinsäurehalbamide. Bei Verwendung von Maleinsäureanhydrid kann das Pfropfcopolymerisat mit Alkoholen oder Aminen zu Halbestern und Halbamiden umgesetzt werden. Die einpolymerisierten Anhydridgruppen selbst können zu in sich unverträglichen Polymeren führen, wenn sie in größerem Maße im Polymeren vorhanden sind.

Die Alkylreste in den Halbestern und Halbamiden können z.B. Methyl-, Ethyl-, Butyl-, Hexyl-, Cyclohexyl-, Ethylhexyl-, Trimethylhexyl- und höhermolekulare Kohlenwasserstoffreste sein. Diese Alkylreste können ihrerseits reaktionsfähige Gruppen, wie z.B. $C=C$-Doppelbindungen, enthalten.

Verzichtet man auf gewisse verfahrenstechnische Vorteile, können auch Halbester von anderen $\alpha$, $\beta$-ungesättigten Dicarbonsäuren, wie z.B. der Fumarsäure eingesetzt werden.

Als Comonomere dienen Vinylester, vorzugsweise Vinylacetat, wobei in untergeordneten Mengen auch andere mit Maleinsäurederivaten copolymerisierbare Monomere, wie z.B. Ethylen miteingebaut werden können. Das gleiche gilt für alle anderen mit Maleinsäurederivaten und Vinylestern copolymerisierbaren Vinylverbindungen.

Die für die Pfropfpolymerisation geeigneten Polymerisationskatalysatoren werden zweckmäßigerweise in einer Menge von 0,01 bis 1,5 Gew.-%, bezogen auf die Summe von Pfropfsubstrat und Pfropfmonomeren eingesetzt. Diese Mengen können selbstverständlich weit überschritten werden.

Als Polymerisationskatalysatoren können Perverbindungen oder Radikale liefernde Azoverbindungen verwendet werden. Beispielhaft seien genannt:

Benzoylperoxid, tert.-Butylperpivalat, tert.-Butylperoctoat, tert.-Butylperbenzoat, di-tert.-Butylperoxid, tert.-Butylperisononanoat, Diisopropylpercarbonat, Dicyclohexylpercarbonat, Acetylcyclohexylhexansulfonylperoxid und Azobisisobuttersäurenitril.

Bevorzugt geeignet sind Benzoylperoxid, tert.-Butylperpivalat, tert.-Butylperoctoat, Dicyclohexylpercarbonat und Azoisobuttersäurenitril.

Geeignet für die Durchführung der erfindungsgemäßen Pfropfreaktion sind ferner die bekannten Redoxsysteme, die aus Peroxiverbindungen und anorganischen wie organischen Reduktionsmitteln aufgebaut sein können, wie sie beispielsweise in Methoden der Organischen Chemie, Houben-Weyl, 4. Auflage (1961), Band 14/1, Seite 263-297, beschrieben sind.

Initiatorradikale können ferner mit Hilfe von UV-Bestrahlung - die auch in Gegenwart von Peroxiverbindungen mit oder ohne Sensibilisator durchgeführt werden kann-Röntgen- und $\gamma$-Strahlen oder beschleunigten Elektronen erzeugt werden. Selbstverständlich können auch noch zusätzliche Regler, die bei Polymerisationen üblich sind, eingesetzt werden.

Die Pfropfreaktion kann auch in heterogener Phase erfolgen. Hierbei kann das Pfropfsubstrat in Form von Granulaten, sphärischen Teilchen, in zylindrischer Form, Plättchenform, Spiralform oder in Gestalt anderer Formkörper eingesetzt werden.

Vorzugsweise liegen die Pfropfsubstrate beim Arbeiten in heterogener Phase in Pulver- oder Granulatform vor und besitzen Korngrößen von ca. 1µm bis etwa 3 cm.

Die Pfropfsubstrate können mit dem Monomerengemisch durch Besprühen, Bestreichen, Tauchen oder durch Dispergieren des Substrates im Monomergemisch in Kontakt gebracht werden, wobei die Monomeren ganz oder teilweise in das Substrat einquellen, und zwar mit Hilfe von Methylenchlorid als Lösungs- oder Quellmittel. Hierbei kann eine Volumenvergrößerung der Substratteilchen im wesentlichen unter Erhalt ihrer ursprünglichen Form eintreten.

Es hängt von der Menge und der Art des Lösungsmittels, der Temperatur, dem Druck, von der Art des Pfropfsubstrates ab, ob ein vollständiges Auflösen erfolgt oder lediglich ein Quellen der Substratteilchen. Natürlich tritt bei der Quellung ein teilweises Auflösen der Substratteilchen ein. Jedoch verbleibt der gelöste Anteil des einzelnen Substratteilchens im wesentlichen im nichtgelösten Anteil des Substratpartikels, so daß die ursprüngliche Form trotz Volumenvergrößerung erhalben bleibt.

Das Quellen der Pfropfsubstrate kann bei Temperaturen bis zu etwa 70°C erfolgen, gegebenenfalls in Gegenwart der Polymerisationskatalysatoren. Die Pfropfcopolymerisation kann in homogener oder heterogener Phase im Temperaturbereich zwischen etwa -20°C und +150°C, bevorzugt zwischen +30°C bis +110°C, und bei Drücken bis zu 50,5 Mpa (500 atü), bevorzugt bei Normaldruck (0,1 Mpa) (1 atm) bis 2,12 Mpa (21 atm) durchgeführt werden.

Es ist auch durchaus möglich, zunächst eine homogene Phase aus Pfropfsubstrat, Monomerengemisch, gegebenenfalls Katalysator und Lösungsmittel herzustellen, die Lösung in Wasser zu dispergieren und dann nach Zusatz des Katalysators zu polymerisieren.

Es ist weiter möglich, die durch das Monomerengemisch gegebenenfalls in Gegenwart eines Radikalbildners gequollenen Pfropfsubstratteilchen in Gegenwart von inerten oder praktisch inerten Gasen wie Stickstoff und Kohlendioxid zu polymerisieren.

Das erfindungsgemäße Verfahren wird vorzugsweise als Lösungspolymerisation durchgeführt, wobei Temperaturen von 30-120°C bevorzugt sind. Bei Herstellung der Pfropfsubstrate durch Massepolymerisation kann man zweckmäßigerweise in einem kombinierten Verfahren nach der Herstellung des Ethylen-Polymerisats bei hohem Druck unter Aufrechterhaltung des geschmolzenen Zustandes des polymerisates zu diesem das aufzupfropfende Monomerengemisch sowie Methylenchlorid und einen Radikalbildner zur Durchführung der Pfropfpolymerisation zugegeben.

Als Lösungsmittel wird bevorzugt tert. Butanol verwendet, insbesondere, wenn die Herstellung der als Pfropfsubstrat verwendeten Ethylen-polymerisate und deren anschließende Pfropfung zu einem einheitlichen Verfahren kombiniert wird. Löst man die getrennt hergestellten Polymerisate dagegen zur pfropfpolymerisation erneut in einem Lösungsmittel auf oder quillt sie nur an, wird bevorzugt Methylenchlorid verwendet.

Das Verfahren der Erfindung kann kontinuierlich oder diskontinuierlich erfolgen. Die Pfropfreaktion kann auch in Polymerisationsschnecken durchgeführt werden und das Abdampfen des Lösungsmittels aus den Pfropfpolymerisatlösungen in Verdampfungsschnecken, Dünnschichtverdampfern oder Sprühtrocknern erfolgen. Bei dem erfindungsgemäßen Verfahren werden die zu pfropfenden Monomeren in der Regel zu mehr als 50 % aufgepfropft. Die Gesamtmenge der aufgepfropften Monomeren beträgt bevorzugt mehr als 5 Gew.-% der Pfropfsubstrate. Die aufgepfropfte Menge kann ohne weiteres wesentlich höher sein und auch weit mehr als 100 % betragen.

Durch fraktionierte Fällung können die ungepfropften Pfropfsubstratanteile vom gepfropften Substrat und von den nicht gepfropften polymerisierten Monomereinheiten abgetrennt werden.

Die Anhydrid- bzw. Carboxylgruppen enthaltenden Pfropfcopolymerisate erweitern und verbessern die anwendungstechnischen Eigenschaften der Ethylen-Polymerisate durch ihre Polarität und Reaktionsfähigkeit erheblich, ohne die charakteristischen günstigen Eigenschaften der als Pfropfsubstrat eingesetzten Ethylen-Polymerisate zu verändern. So ist die Adhäsion der Polymerisate auf Oberflächen erheblich verbessert. Es besteht die Möglichkeit, Vernetzungsreaktionen durchzuführen oder weitere Substituenten über Ester- oder Amidgruppierungen in die Polymerisate einzuführen. Als ein weiterer günstiger Effekt zeigt sich, daß die Transparenz ethylenreicher Polymerisate wesentlich verbessert wird. Auch die Verträglichkeit der Pfropfpolymerisate mit Kunststoffen anderer Konstitution z.B. Celluloseestern ist vielfach besser als die der verwendeten Pfropfsubstrate.

Dementsprechend ergibt sich für die Produkte eine vielseitige Verwendung, z.B. zur Herstellung von Formkörpern, Folien, Coextrusionsfolien, Klebstoffen, Beschichtungen und zur Abmischung mit anderen Kunststoffen.

Die folgenden Beispiele erläutern die Erfindung. Prozentangaben beziehen sich stets auf das Gewicht.

**Beispiel 1**

In einem 3 1-Dreihalskolben mit Rückflußkühler und Thermometer wurde eine Lösung aus
160 Gew.-Teilen eines Ethylen-Vinylacetat-Copolymeren
mit einem Vinylacetatgehalt von 45 %
in
800 Gew.-Teilen tert. Butanol bereitet.
Nachdem die Luft im Reaktionsgefäß durch Stickstoff verdrängt worden war, wurden unter weiterer schwacher Stickstoffbegasung (ca. 3 l/h)
50 Gew.-Teile Maleinsäure-cyclohexylhalbester und eine
Lösung von
0,5 Gew.-Teilen Cyclohexylperoxidicarbonat in 22 Gew.-Teilen Vinylacetat
bei 20° C zugesetzt und bis zur vollkommenen Lösung aller Bestandteile 15 Minuten bei 20° C gerührt. Sodann wurde die Innentemperatur auf 50° C erhöht und 10 Stunden gehalten.

Die entstandene homogene Lösung bildete nach Verdunsten des Lösungsmittels klare Filme mit leicht klebriger Oberfläche und ausgezeichneter Glashaftung. Nach Ausfällung der Lösung in Wasser und Trocknung bei 50° C im Vakuum wurden 208 g Polymerisat erhalten. Die Grenzviskosität (gemessen in Tetrahydrofuran) betrug 0,98 dl/g. Das Produkt ließ sich bei 160° C und einem Preßdruck von 200 bar zu klaren Platten verarbeiten.

**Beispiel 2a**

Gemäß Beispiel 1 wurde eine Lösung von
100 Gew.-Teilen Ethylen-Vinylacetatcopolymerisat
(45 % Vinylacetat-Gehalt)
in 900 Gew.-Teilen Methylenchlorid
mit einer Mischung von
10 Gew.-Teilen Maleinsäureanhydrid
15 Gew.-Teilen Vinylacetat
und 0,125 Gew.-Teilen Cyclohexylperoxidicarbonat
gepfropft. Man erhielt eine klare Lösung, die zu einem glasklaren Film auftrocknete.

**Beispiel 2b**

Wie in Beispiel 2a beschrieben, wurde eine Mischung aus
10 Gew.-Teilen Maleinsäureanhydrid
15 Gew.-Teilen Vinylacetat
und 0,125 Gew.-Teilen

Cyclohexylperoxidicarbonat in 900 Gew.-Teilen Methylenchlorid umgesetzt. Es fielen 23,5 Gew.-Teile eines pulvrigen Copolymerisates von Vinylacetat mit Maleinsäureanhydrid aus mit einer · Grenzviskosität von 0,43 dl/g (gemessen in Aceton).

Dies kann als ein Beweis dafür gewertet werden, daß beim Beispiel 2a der polymerisierte Anteil des Maleinsäureanhydrids und Vinylacetats auf das Ethylen-Vinylacetatpolymere gepfropft worden war.

## Beispiel 3

Gemäß Beispiel 1 wurden 160 g eines Ethylen-Vinylacetatcopolymerisates mit einem Vinylacetatgehalt von 33,1 % gepfropft. Die erhaltene Lösung bildete einen glasklaren Film. Nach Ausfällung in Wasser und Trocknung wurden 203 g Polymerisat erhalten mit einer Grenzviskosität (gemessen in Tetrahydrofuran) von 0,96 dl/g.

## Beispiel 4

Gemäß Beispiel 1 wurden anstelle des Maleinsäurecyclohexylhalbesters 50 g Maleinsäure-2-ethylhexyl-halbesters eingesetzt. Es wurden nach Ausfällung in Wasser und Trocknung 196 g Pfropfprodukt erhalten mit einer Grenzviskosität von 0,93 dl/g (gemessen in Tetrahydrofuran). Aus der Lösung bildete das Produkt klare Filme mit guter Glashaftung.

## Beispiel 5

Gemäß Beispiel 1 wurden anstelle des Maleinsäurecyclohexylhalbesters 50 g Maleinsäure-trimethylhexylhalbester eingesetzt. Die Alkoholkomponente des Halbesters bestand aus einem Isomerengemisch von 60 % 2,4,4-Trimethyl-1-hexanol und 40 % 3,5,5-Trimethyl-1-hexanol.

Es wurden 201 g an ausgefälltem, trockenem Produkt mit einer Grenzviskosität (gemessen in Tetrahydrofuran) von 0,91 dl/g erhalten. Die Lösung bildete nach dem Auftrocknen glasklare Filme.

## Beispiel 6

Gemäß Beispiel 1 wurde das Ethylen-Vinylacetatcopolymerisat mit einer Mischung aus
27 Gew.-Teilen Maleinsäure-methylhalbester
30 Gew.-Teilen Vinylacetat

und 0,28 Gew.-Teilen Cyclohexylperoxidicarbonat
unter sonst gleichen Bedingungen gepfropft.
Nach der Ausfällung erhielt man 193 g Pfropfcopolymerisat mit einer Grenzviskosität von 0,98 dl/g (gemessen in Tetrahydrofuran). Ein aus der Lösung getrockneter glasklarer Film zeigte eine sehr starke Haftung auf Glas und Metall.

## Beispiel 7

Vernetzung eines Pfropfcopolymerisats mit einem Triisocyanat:
0,92 Gew.-Teile des nach Beispiel 3 hergestellten Pfropfcopolymerisates wurden in 8 Gew.-Teilen Methylenchlorid gelöst.
Zu dieser Lösung wurden
1,85 Gew.-Teile einer 20 gew.-%igen Lösung von 4,4',4''-Triisocyanatotriphenyl-methan in Methylenchlorid
und 0,01 Gew.-Teile Dibutyl-zinn-dilaurat gegeben.
Die Lösung war nach etwa 8-stündigem Stehen bei 20°C völlig geliert. Ein auf Glas aufgezogener Film war nach 24-stündigem Trocknen bei 20°C vollständig vernetzt. Hieraus geht hervor, daß dieses Pfropfsubstrat gepfropft und in das Netzwerk eingebaut wurde.

## Beispiel 8

Gemäß Beispiel 1 wurde das Ethylen-Vinylacetatcopolymerisat mit einer Mischung aus
32 Gew.-Teilen Maleinsäureanhydrid
44 Gew.-Teilen Vinylacetat
und 0,52 Gew.-Teilen Cyclohexylperoxidicarbonat
gepfropft. Nach Ausfällung in Wasser wurden 189 g Pfropfprodukt erhalten. Ein aus der Lösung aufgezogener Film war leicht getrübt.

## Beispiel 9

Umsetzung des nach Beispiel 8 hergestellten Pfropfproduktes zum Halbamid:
8 Gew.-Teile des Pfropfproduktes wurden in 90 Gew.-Teilen tert. Butanol gelöst
mit 0,5 Gew.-Teilen Cyclohexylamin versetzt und 10 Stunden auf 82°C erhitzt.
Die Lösung wurde mit Wasser ausgefällt und das Produkt bei 50°C im Vakuum getrocknet. Es wurden 7,8 Gew.-Teile des entsprechenden Cyclohexylhalbamids erhalten. Aus einer 10 %igen Tetrahydrofuranlösung wurde nach dem Auftrocknen ein leicht opaker Film erhalten.

**Beispiel 10**

Gemäß Beispiel 9 wurde das nach Beispiel 8 hergestellte Pfropfprodukt mit
0,9 Gew.-Teilen Dodecylamin
umgesetzt.
Nach der Ausfällung wurden 7,3 Gew.-Teile des entsPrechenden Dodecylhalbamids erhalten. Aus einer 10 %igen Tetrahydrofuranlösung bildete sich nach dem Auftrocknen ein klarer Film.

**Beispiel 11**

In einen 12 1 Autoklaven mit Ankerrührer wurden
1280 Gew.-Teile eines Ethylen-Vinylacetatcopolymerisats mit
8 % Vinylacetat-Gehalt
und 3900 Gew.-Teile Methylenchlorid
eingefüllt. Nachdem der Autoklav 3 x mit 2 bar Stickstoff gespült worden war, wurde in verschlossenem Zustand 3 Stunden bei 85°C gelöst bei einer Rührerdrehzahl von 100 U/min. Hierzu wurde eine Lösung von 400 Gew.-Teilen Maleinsäurecyclohexylhalbester
und 176 Gew.-Teilen Vinylacetat
in 750 Gew.-Teilen Methyienchlorid
mit Stickstoff in den Autoklaven gedrückt und weitere 15 Minuten bei 85°C gerührt. Sodann wurde eine Lösung von
5,4 Gew.-Teilen Benzoylperoxid
in 300 Gew.-Teilen Methylenchlorid
eingedrückt. Es wurde weitere 10 Stunden bei 85°C gerührt. Nach dem Abkühlen bildete sich ein pulverförmiges Produkt, welches abgesaugt, mit 5000 Gew.-Teilen Methylenchlorid gewaschen und bei 50°C getrocknet wurde. Es wurden 1580 Gew.-Teile Pfropfprodukt erhalten. Aus dem Produkt lassen sich transparente Folien herstellen.

**Beispiel 12**

Gemäß Beispiel 11 wurden 1280 Gew.-Teile reines Polvethylen gepfropft.
Die Ausbeute an Pfropfprodukt betrug 1420 Gew.-Teile. Aus dem Produkt lassen sich transparente Folien und Formkörper hoher Festigkeit und Stabilität herstellen.

**Patentansprüche**

1. Verfahren zur Herstellung von Anhydrid- oder Carboxylgruppen enthaltenden Ethylen-Pfropfcopolymerisaten in homogener oder heterogener Phase in einem organischen Lösungsmittel, dadurch gekennzeichnet, daß man
A) 5-70 Gew.-% eines Monomerengemisches aus

a) 10- Gew.-% eines Vinylesters einer aliphatischen $C_1$-$C_{18}$-Monocarbonsäure und
b) 90-30 Gew.-% Maleinsäureanhydrid und/oder dessen $C_1$-$C_{20}$-Alkyl-Halbester
in Gegenwart von
B) 95-30 Gew.-% eines Ethylen-Homopolymerisats oder eines Ethylen-Vinylester-Copolymerisats mit 5-70 Gew.-% einpolymerisierten Einheiten eines Vinylesters einer aliphatischen $C_1$-$C_{18}$-Monocarbonsäure als Pfropfsubstrat in tert. Butanol oder Methylenchlorid radikalisch polymerisiert, wobei die Summe von A) und B) bzw. a) und b) jeweils 100 Gew.-% beträgt.

2. Verfahren nach Anspruch 1, dadurch gekennzeichnet, daß der Vinylester im Monomerengemisch A und/oder im Pfropfsubstrat B Vinylacetat ist.

3. Verfahren nach Anspruch 1 oder 2, dadurch gekennzeichnet, daß man in einem ersten Verfahrensschritt in an sich bekannter Weise das als Pfropfsubstrat B eingesetzte Ethylen-Homo- oder -Copolymerisat herstellt und das erhaltene Reaktionsgemisch in einem zweiten Verfahrensschritt ohne Isolierung des Pfropfsubstrats, gegebenenfalls nach Verminderung der noch vorhandenen Menge an nicht umgesetztem Ethylen, mit dem aufzupfropfenden Monomerengemisch A versetzt und dieses radikalisch polymerisiert.

4. Verfahren nach Anspruch 3, dadurch gekennzeichnet, daß man das Pfropfsubstrat bei Drücken oberhalb von 1000 bar herstellt, anschließend den Ethylendruck auf weniger als 400 bar erniedrigt und nach Zugabe von Methylenchlorid und aufzupfropfendem Monomerengemisch die Pfropfpolymerisation durchführt.

5. Verfahren nach Anspruch 3, dadurch gekennzeichnet, daß man im ersten Verfahrensschritt zur Herstellung des Pfropfsubstrats Ethylen und Vinylester in tert. Butanol copolymerisiert, nach einem Umsatz von mindestens 20 % der Monomeren restliches Ethylen durch Druckerniedrigung weitgehend entfernt und das erhaltene Reaktionsgemisch im zweiten Verfahrensschritt mit Maleinsäureanhydrid und/oder dessen Halbestern versetzt und zusammen mit restlichem Vinylester radikalisch polymerisiert.

6. Verfahren nach Anspruch 1 oder 2, dadurch gekennzeichnet, daß man als Pfropfmonomere Vinylester und Maleinsäureanhydrid einsetzt und die Anhydridgruppen des Pfropfcopolymerisats anschließend mit $C_1$-$C_{20}$-Alkylalkoholen, Ammoniak oder $C_1$-$C_{20}$-Alkylaminen zu Halbester- oder Halbamidgruppen umsetzt.

**Claims**

1. Process for the production of ethylene graft copolymers containing anhydride or carboxyl groups in homogeneous or heterogeneous phase in an organic solvent, characterised in that

A) 5 - 70% by weight of a monomer mixture of

a) 10 - 70% by weight of a vinyl ester of an aliphatic $C_1$-$C_{18}$-monocarboxylic acid and

b) 90 - 30% by weight of maleic acid anhydride and/or its $C_1$-$C_{20}$-alkyl semiesters are radically polymerised in the presence of

B) 95 - 30% by weight of an ethylene homopolymer or an ethylene/vinyl ester copolymer containing 5 - 70% by weight of copolymerised units of a vinyl ester of an aliphatic $C_1$-$C_{18}$-monocarboxylic acid as the graft substrate in tert.-butanol or methylene chloride, the sum of A) and B) and the sum of a) and b) each amounting to 100% by weight.

2. Process according to Claim 1, characterised in that the vinyl ester in the monomer mixture A and/or in the graft substrate B is vinyl acetate.

3. Process according to Claim 1 or 2, characterised in that, in a first process step, the ethylene homopolymer or copolymer used as the graft substrate B is produced in known manner and, in a second process step, the monomer mixture A to be grafted on is added to the resulting reaction mixture without isolation of the graft substrate, optionally after reduction of the amount of unreacted ethylene still present, and radically polymerised.

4. Process according to Claim 3, characterised in that the graft substrate is produced under pressures above 1000 bars, after which the ethylene pressure is reduced to below 400 bars and the graft polymerisation is carried out after the addition of methylene chloride and monomer mixture to be grafted on.

5. Process according to Claim 3, characterised in that, in the first process step for preparing the graft substrate, ethylene and vinyl ester are copolymerised in tert.-butanol, residual ethylene is largely removed by reducing the pressure after a conversion of at least 20% of the monomers has been reached and, in the second process step, maleic acid anhydride and/or its semiesters is/are added to the reaction mixture obtained which is then radically polymerised together with the remaining vinyl ester.

6. Process according to Claim 1 or 2, characterised in that vinyl esters and maleic acid anhydride are used as the graft monomer and the anhydride groups in the graft copolymer are subsequently reacted with $C_1$-$C_{20}$-alkyl alcohols, ammonis or $C_1$-$C_{20}$-alkyl amines to form semiester or semiamide groups.

**Revendications**

1. Procédé pour la fabrication de copolymères d'éthylène contenant des groupes anhydrides ou carboxyles en phase homogène ou hétérogène dans un solvant organique, caractérisé en ce que l'on soumet à la polymérisation radicalaire

A) 5-70 % en poids d'un mélange de monomères de

a) 10-70 % en poids d'un ester de vinyle d'un acide monocarboxylique aliphatique en $C_1$-$C_{18}$ et

b) 90-30 % en poids d'anhydride maléique et/ou de ses semi-esters d'alkyles en $C_1$-$C_{20}$ en présence de

8) 95-30 % en poids d'un homopolymère d'éthylène ou d'un copolymère éthylène-ester vinylique contenant 5-70 % en poids de motifs copolymérisés d'un ester vinylique d'un acide monocarboxylique aliphatique en $C_1$-$C_{18}$ comme support de greffe dans le tert-butanol ou le chlorure de méthylène, la somme de A) et 8) ou de a) et b) étant chaque fois de 100 % en poids.

2. Procédé selon la revendication 1, caractérisé en ce que l'ester de vinyle dans le mélange de monomères A et/ou dans le support de greffe 8 est l'acétate de vinyle.

3. Procédé selon la revendication 1 ou 2, caractérisé en ce que l'on prépare de manière connue dans une première étape l'homo- ou copolymère d'éthylène utilisé comme support de greffe 8 et on ajoute dans une seconde étape le mélange de monomères A à greffer au mélange de réaction obtenu sans isoment du support de greffe, éventuellement après diminution de la quantité d'éthylène non transformé encore présent, et on effectue la polymérisation radicalaire.

4. Procédé selon la revendication 3, caractérisé en ce que l'on prépare le support de greffe sous des pressions de plus de 7000 bar, ensuite on abaisse la pression d'éthylène à moins de 400 bar et, après addition de chlorure de méthylène et du mélange de monomères à greffer, on effectue la polymérisation greffée.

5. Procédé selon la revendication 3, caractérisé en ce que l'on copolymérise l'éthylène et l'ester vinylique dans Le tert-butanol dans une première étape pour la préparation du support de greffe, on élimine complètement l'éthylène restant par abaissement de la pression après une conversion d'au moins 20 % des monomères et on ajoute dans une seconde étape de l'anhydride maléique et/ou ses semi-esters au mélange de réaction obtenu et on le soumet à la polymérisation radicalaire conjointement avec le reste d'ester vinylique.

6. Procédé selon la revendication 1 ou 2, caractérisé en ce que l'on utilise comme monomères de greffage des esters vinyliques et de l'anhydride maléique et l'on fait ensuite réagir les groupes anhydrides du copolymère greffé en groupes semi-esters ou semi-amides avec des alcanols en $C_1$-$C_{20}$, l'ammoniac ou des alkylamines en $C_1$-$C_{20}$.